(19) Europäisches Patentamt

European Patent Office

Office européen des brevets

(11) EP 4 783 492 A2

## (12) EUROPEAN PATENT APPLICATION

(43) Date of publication:
29.07.2026 Bulletin 2026/31

(21) Application number: 26151946.6

(22) Date of filing: 15.01.2026

(51) International Patent Classification (IPC):
H04J 3/06 (2006.01)

(52) Cooperative Patent Classification (CPC):
H04J 3/0667

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH LA MA MD TN

(30) Priority: 24.01.2025 US 202519036394

(71) Applicant: Nokia Solutions and Networks Oy
02610 Espoo (FI)

(72) Inventors:
• DONTHI, Shiva Sri Krishna
Stittsville (CA)
• ROBERTS, Peter
Ottawa (CA)
• GOWTHAMAN, Vinoth
Kanata (CA)

(74) Representative: Zinsinger, Norbert
Louis Pöhlau Lohrentz
Patentanwälte Partnerschaft mbB
P.O.Box 30 55
90014 Nürnberg (DE)

## (54) SYNCHRONIZING TIME OVER LAG LINKS USING CALIBRATED DELAYS

(57) In certain embodiments involving a Precision Time Protocol (PTP) time transmitter connected to a PTP time receiver over a link aggregation group (LAG), the receiver uses a table of delay values to compensate for differences in average transmission delay over the different LAG links when synchronizing its local clock with the transmitter's reference clock. When a LAG link is added or changed, the transmitter and receiver perform a link-delay-calibration operation to calculate the delay to be used for subsequent synchronization operations.

FIG. 1    100

**Description**

BACKGROUND

Field of the Disclosure

The present disclosure relates to distributed computer networks and, more specifically, to synchronizing time between nodes in a distributed computer network.

Description of the Related Art

This section introduces aspects that may help facilitate a better understanding of the disclosure. Accordingly, the statements of this section are to be read in this light and are not to be understood as admissions about what is prior art or what is not prior art.

In a Precision Time Protocol (PTP) system conforming to the IEEE Std 1588™-2008 (or its revised version of IEEE1588-2019) standard, the teachings of which are incorporated herein by reference, a PTP time transmitter functions as a time reference for one or more PTP time receivers, where the PTP time transmitter maintains a PTP reference clock and each PTP time receiver maintains its own local clock that it disciplines to match the time at the PTP time transmitter.

In order to compensate for offsets that will invariably occur between the time at the PTP time transmitter and the time at the PTP time receivers, each PTP time receiver will periodically initiate clock-synchronization operations with its PTP time transmitter to synchronize its local clock with the PTP reference clock at the PTP time transmitter. In order for a PTP time receiver to synchronize its local clock with the PTP reference clock at the PTP time transmitter, the PTP time receiver calculates an offset value used to adjust its local clock to be in sync with the PTP reference clock.

In order to determine the offset value for a PTP time receiver, it is known for the PTP time transmitter and the PTP time receiver to perform the following clock-synchronization (aka clock-sync) operation:

- The PTP time transmitter transmits a PTP Sync message to the PTP time receiver;

- The PTP time transmitter records the PTP reference time (T1) of transmission of the PTP Sync message;

- The PTP time receiver records the local time (T2) of receipt of the PTP Sync message;

- The PTP time receiver transmits a PTP Delay-Request message to the PTP time transmitter;

- The PTP time receiver records the local time (T3) of transmission of the PTP Delay-Request message;

- The PTP time transmitter records the PTP reference time (T4) of receipt of the PTP Delay-Request message;

- The PTP time transmitter conveys, to the PTP time receiver, the PTP reference time (T1) of transmission of the PTP Sync message and the PTP reference time (T4) of receipt of the PTP Delay-Request message;

- The PTP time receiver uses the four time values T1 through T4 to calculate the offset between its local clock and the PTP reference clock; and

- The PTP time receiver uses the calculated offset to adjust its local clock to be synchronized with the PTP reference clock.

Those skilled in the art will understand that, depending on the implementation, the PTP time transmitter can convey time T1 to the PTP time receiver in the PTP Sync message or in a subsequent PTP Follow-up message. Furthermore, the PTP time transmitter conveys time T4 to the PTP time receiver through a PTP Delay-Response message.

In some systems, a PTP time transmitter and a PTP time receiver are connected by a link aggregation group (LAG) comprising multiple, different, point-to-point, physical links between multiple, different ports at the PTP time transmitter and respective ports at the PTP time receiver. According to conventional LAG technology, LAG processing at each node (i.e., the PTP time transmitter or receiver) independently determines which port / link to transmit each different message to the other node. As a result of this conventional, independent LAG processing, when implementing the clock-sync operation, one link may be used to transmit the PTP Sync message from the PTP time transmitter to the PTP time receiver and a different link may be used to transmit the corresponding PTP Delay-Request message from the PTP time receiver to the PTP time transmitter. In that case, if the delays (i.e., the time that it takes for a message to travel between the **PTP** time transmitter and the **PTP** time receiver) for those two links are significantly different, then this is part of the total error at the **PTP** time receiver's calculation to synchronize its local clock with the **PTP** reference clock.

SUMMARY

Problems in the prior art are addressed in accordance with the principles of the present disclosure by a technique that calibrates the potentially different delays for the different LAG links between a **PTP** time transmitter and a **PTP** time receiver and uses those calibrated delays to compensate for any differences in delay between those links during a **PTP** clock-sync operation that involves two different links for the **PTP** Sync and Delay-Request messages. Exemplary embodiments disclose a method for a time receiver having a local clock and connected to a time transmitter via a link aggregation group (LAG) comprising a plurality of LAG links between the time transmitter and the time receiver, the time transmitter having a reference clock, the method comprising the time receiver: receiving a first sync message from the time transmitter over a first of the LAG links; transmitting a first delay-request message to the time transmitter over the first LAG link; generating a first calibrated delay value for the first LAG link based on the first sync message and the first delay-request message; receiving a second sync message from the time transmitter over a second of the LAG links; transmitting a second delay-request message to the time transmitter over the second LAG link; generating a second calibrated delay value for the second LAG link based on the second sync message and the second delay-request message; receiving a subsequent sync message from the time transmitter over the first LAG link; transmitting a subsequent delay-request message to the time transmitter over the second LAG link; and synchronizing the local clock to the reference clock based on the subsequent sync message, the subsequent delay-request message, the first calibrated delay value, and the second calibrated delay value. **In** exemplary embodiments, the time receiver is a Precision Time Protocol (PTP) time receiver; and the sync and delay-request messages are **PTP** messages. In exemplary embodiments, the first and second sync messages are link-calibration-phase sync messages. **In** exemplary embodiments, the first and second sync messages are routine sync messages.

Exemplary embodiments disclose a time receiver having a local clock and connected to a time transmitter via a link aggregation group (LAG) comprising a plurality of LAG links between the time transmitter and the time receiver, the time transmitter having a reference clock, the time receiver comprising; at least one processor; and at least one memory storing instructions that, upon being executed by the at least one processor, cause the time receiver at least to: receive a first sync message from the time transmitter over a first of the LAG links; transmit a first delay-request message to the time transmitter over the first LAG link; generate a first calibrated delay value for the first LAG link based on the first sync message and the first delay-request message; receive a second sync message from the time transmitter over a second of the LAG links; transmit a second delay-request message to the time transmitter over the second LAG link; generate a second calibrated delay value for the second LAG link based on the second sync message and the second delay-request message; receive a subsequent sync message from the time transmitter over the first LAG link; transmit a subsequent delay-request message to the time transmitter over the second LAG link; and synchronize the local clock to the reference clock based on the subsequent sync message, the subsequent delay-request message, the first calibrated delay value, and the second calibrated delay value. **In** exemplary embodiments, the time receiver is a Precision Time Protocol (PTP) time receiver; and the sync and delay-request messages are **PTP** messages. In exemplary embodiments, the first and second sync messages are link-calibration-phase sync messages. In exemplary embodiments, the first and second sync messages are routine sync messages.

Exemplary embodiments disclose a method for a time transmitter having a reference clock and connected to a time receiver via a link aggregation group comprising a plurality of LAG links between the time transmitter and the time receiver, the time receiver having a local clock, the method comprising the time transmitter: transmitting a first link-calibration-phase sync message to the time receiver over a first of the LAG links; receiving a first link-calibration-phase delay-request message from the time receiver over the first LAG link to enable the time receiver to generate a first calibrated delay value for the first LAG link based on the first sync message and the first delay-request message; transmitting a second link-calibration-phase sync message to the time receiver over a second of the LAG links; receiving a second link-calibration-phase delay-request message from the time receiver over the second LAG link to enable the time receiver to generate a second calibrated delay value for the second LAG link based on the second sync message and the second delay-request message; transmitting a subsequent routine sync message to the time receiver over the first LAG link; and receiving a subsequent routine delay-request message from the time receiver over the second LAG link to enable the time receiver to synchronize the local clock to the reference clock based on the subsequent sync message, the subsequent delay-request message, the first calibrated delay value, and the second calibrated delay value. In exemplary embodiments, the time transmitter is a PTP time transmitter; and the sync and delay-request messages are PTP messages.

Exemplary embodiments disclose a time transmitter having a reference clock and connected to a time receiver via a link aggregation group comprising a plurality of LAG links between the time transmitter and the time receiver, the time receiver having a local clock, the time transmitter comprising; at least one processor; and at least one memory storing instructions that, upon being executed by the at least one processor, cause the time transmitter at least to: transmit a first link-calibration-phase sync message to the time receiver over a first of the LAG links; receive a first link-calibration-phase delay-request message from the time receiver over the first LAG link to enable the time receiver to generate a first calibrated delay value for the first LAG link based on the first sync message and the first delay-request message; transmit a second link-calibration-phase sync message to the time receiver over a second of the LAG links; receive a second link-calibration-phase delay-request message from the time receiver over the second LAG link to enable the time receiver to generate a second calibrated delay value for the second LAG link based on the second sync message and the second delay-request message; transmit a subsequent routine sync message to the time receiver over the first LAG link; and receive a subsequent routine delay-request message from the time receiver over the second LAG link to enable the time receiver to synchronize the local clock to the reference clock based on the subsequent sync message, the subsequent delay-request message, the first calibrated delay value, and the second calibrated delay value. In exemplary embodiments, the time transmitter is a **PTP** time transmitter; and the sync and delay-request messages are PTP messages.

Example embodiments disclose a method for a time receiver having a local clock and connected to a time transmitter via a link aggregation group (LAG) comprising a plurality of LAG links between the time transmitter and the time receiver, the time transmitter having a reference clock, the method comprising the time receiver: receiving a first sync message from the time transmitter over a first of the LAG links; transmitting a first delay-request message to the time transmitter over the first LAG link; generating a first calibrated delay value for the first LAG link based on the first sync message and the first delay-request message; receiving a second sync message from the time transmitter over a second of the LAG links; transmitting a second delay-request message to the time transmitter over the second LAG link; generating a second calibrated delay value for the second LAG link based on the second sync message and the second delay-request message; receiving a subsequent sync message from the time transmitter over the first LAG link; transmitting a subsequent delay-request message to the time transmitter over the second LAG link; and synchronizing the local clock to the reference clock based on the subsequent sync message, the subsequent delay-request message, the first calibrated delay value, and the second calibrated delay value. **In** example embodiments, the time receiver is a Precision Time Protocol (PTP) time receiver; and the sync and delay-request messages are **PTP** messages. In example embodiments, the first and second sync messages are link-calibration-phase sync messages. In example embodiments, the first and second sync messages are routine sync messages.

Example embodiments disclose a time receiver having a local clock and connected to a time transmitter via a link aggregation group (LAG) comprising a plurality of LAG links between the time transmitter and the time receiver, the time transmitter having a reference clock, the time receiver comprising means to cause the time receiver at least to: receive a first sync message from the time transmitter over a first of the LAG links; transmit a first delay-request message to the time transmitter over the first LAG link; generate a first calibrated delay value for the first LAG link based on the first sync message and the first delay-request message; receive a second sync message from the time transmitter over a second of the LAG links; transmit a second delay-request message to the time transmitter over the second LAG link; generate a second calibrated delay value for the second LAG link based on the second sync message and the second delay-request message; receive a subsequent sync message from the time transmitter over the first LAG link; transmit a subsequent delay-request message to the time transmitter over the second LAG link; and synchronize the local clock to the reference clock based on the subsequent sync message, the subsequent delay-request message, the first calibrated delay value, and the second calibrated delay value. In example embodiments, the time receiver is a Precision Time Protocol (PTP) time receiver; and the sync and delay-request messages are PTP messages. In example embodiments, the first and second sync messages are link-calibration-phase sync messages. In example embodiments, the first and second sync messages are routine sync messages.

Example embodiments disclose a method for a time transmitter having a reference clock and connected to a time receiver via a link aggregation group comprising a plurality of LAG links between the time transmitter and the time receiver, the time receiver having a local clock, the method comprising the time transmitter: transmitting a first link-calibration-phase sync message to the time receiver over a first of the LAG links; receiving a first link-calibration-phase delay-request message from the time receiver over the first LAG link to enable the time receiver to generate a first calibrated delay value for the first LAG link based on the first sync message and the first delay-request message; transmitting a second link-calibration-phase sync message to the time receiver over a second of the LAG links; receiving a second link-calibration-phase delay-request message from the time receiver over the second LAG link to enable the time receiver to generate a second calibrated delay value for the second LAG link based on the second sync message and the second delay-request message; transmitting a subsequent routine sync message to the time receiver over the first LAG link; and receiving a subsequent routine delay-request message from the time receiver over the second LAG link to enable the time receiver to synchronize the local clock to the reference clock based on the subsequent sync message, the subsequent delay-request message, the first calibrated delay value, and the second calibrated delay value. In example embodiments, the time transmitter is a PTP time transmitter; and the sync and delay-request messages are PTP messages.

Example embodiments disclose a time transmitter having a reference clock and connected to a time receiver via a link aggregation group comprising a plurality of LAG links between the time transmitter and the time receiver, the time receiver having a local clock, the time transmitter comprising means to cause the time transmitter at least to: transmit a first link-calibration-phase sync message to the time receiver over a first of the LAG links; receive a first link-calibration-phase delay-request message from the time receiver over the first LAG link to enable the time receiver to generate a first calibrated delay value for the first LAG link based on the first sync message and the first delay-request message; transmit a second link-calibration-phase sync message to the time receiver over a second of the LAG links; receive a second link-calibration-phase delay-request message from the time receiver over the second LAG link to enable the time receiver to generate a second calibrated delay value for the second LAG link based on the second sync message and the second delay-request message; transmit a subsequent routine sync message to the time receiver over the first LAG link; and receive a subsequent routine delay-request message from the time receiver over the second LAG link to enable the time receiver to synchronize the local clock to the reference clock based on the subsequent sync message, the subsequent delay-request message, the first calibrated delay value, and the second calibrated delay value. In example embodiments, the time transmitter is a PTP time transmitter; and the sync and delay-request messages are PTP messages.

## BRIEF DESCRIPTION OF THE DRAWINGS

Embodiments of the disclosure will become more fully apparent from the following detailed description, the appended claims, and the accompanying drawings in which like reference numerals identify similar or identical elements.

FIG. 1 is a block diagram of a PTP system comprising a PTP time transmitter connected to a PTP time receiver by a link aggregation group;

FIG. 2 is a diagram representing the flow of messages during a link-delay-calibration operation between the PTP time transmitter and the PTP time receiver for a link in the link aggregation group; and

FIG. 3 is a simplified hardware block diagram of an example node that can be used to implement the PTP time transmitter and the PTP time receiver of FIGs. 1 and 2.

## DETAILED DESCRIPTION

Detailed illustrative embodiments of the present disclosure are disclosed herein. However, specific structural and functional details disclosed herein are merely representative for purposes of describing example embodiments of the present disclosure. The present disclosure may be embodied in many alternate forms and should not be construed as limited to only the embodiments set forth herein. Further, the terminology used herein is for the purpose of describing particular embodiments only and is not intended to be limiting of example embodiments of the disclosure.

As used herein, the singular forms "a," "an," and "the," are intended to include the plural forms as well, unless the context clearly indicates otherwise. It further will be understood that the terms "comprises," "comprising," "contains," "containing," "includes," and/or "including," specify the presence of stated features, steps, or components, but do not preclude the presence or addition of one or more other features, steps, or components. It also should be noted that in some alternative implementations, the functions/acts noted may occur out of the order noted in the figures. For example, two figures shown in succession may in fact be executed substantially concurrently or may sometimes be executed in the reverse order, depending upon the functions/acts involved.

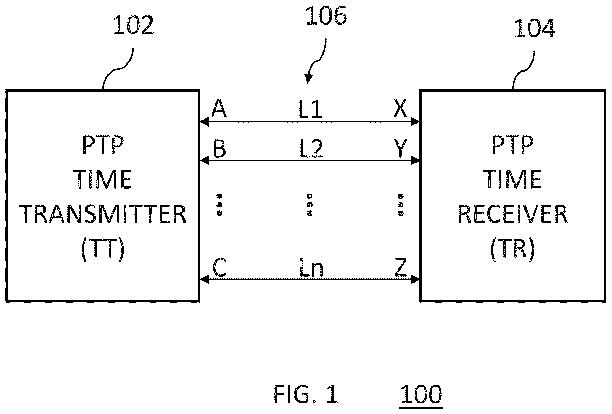

FIG. 1 is a block diagram of a PTP system 100 comprising a PTP time transmitter (TT) 102 connected to a PTP time receiver (TR) 104 by a link aggregation group (LAG) 106 consisting of links L1-Ln, where n is an integer greater than 1, link L1 connects port A of the PTP TT 102 with port X of the PTP TR 104, link L2 connects port B of the PTP TT 102 with port Y of the PTP TR 104, and so on down to link Ln, which connects port C of the PTP TT 102 with port Z of the PTP TR 104. Those skilled in the art will understand that the PTP TT 102 may be connected to any suitable number of other PTP time receivers via other link aggregation groups that are analogous to the LAG 106 and the PTP TR 104 of FIG. 1.

When a new port is added to the LAG 106 for a link Li or when there is an underlying Layer 1 transport change in link Li (e.g., a change of cable or a change of SFP (small form-factor pluggable) transceiver, etc.) or at the discretion of the system operator, the PTP TT 102 and the PTP TR 104 perform a special, link-delay-calibration operation to calculate the average delay between the PTP TT 102 and the PTP TR 104 over that link Li.

In some implementations of the link-delay-calibration operation, the following steps are performed at the corresponding port (e.g., port A of FIG. 1) of the PTP TT 102:

1. TT implements and maintains two flags: TR_DISCOVERED and CALIBRATION_DONE.

2. Operator adds port A to the LAG 106 in TT.

3. TT sets TR_DISCOVERED to FALSE.

4. TT sets CALIBRATION_DONE to FALSE.

5. TT transmits Sync messages on port A at the rate MSG_RATE.

    a. TT resets and starts the timer TR_DISCOVERY_TIMER.

6. Upon reception of the Delay-Request message,

    a. TR_DISCOVERED is set to TRUE and disables TR_DISCOVERY_TIMER,

b. TT resets and starts the timer DEL_REQ_RX_TIMER, and

c. TT sends a Delay-Response message on port A.

7. Upon DEL_REQ_RX_TIMER timeout,

a. TT resets and disables the timer DEL_REQ_RX_TIMER,

b. TT stops transmitting Sync messages on port A, and

c. TT sets CALIBRATION_DONE to TRUE.

8. Upon TR_DISCOVERY_TIMER timeout,

a. TT disables TR_DISCOVERY_TIMER and stops transmitting Sync messages and exits the calibration process.

In those same implementations of the link-delay-calibration operation, the following steps are performed at the corresponding port (e.g., port X of FIG. 1) of the PTP TR 104:

1. TR implements and maintains the flags CALIBRATION_DONE and TT_DISCOVERED.

2. Operator adds port X to the LAG 106 in TR.

3. TR sets TT_DISCOVERED to FALSE.

4. TR enables and starts TT_DISCOVERY_TIMER.

5. TR sets CALIBRATION_DONE to FALSE.

6. Upon reception of Sync message,

a. TR transmits Delay-Request message on port X at the rate MSG_RATE,

b. TR sets TT_DISCOVERED to TRUE,

c. TR resets and disables TT_DISCOVERY_TIMER, and

d. TR enables and starts DELAY_RESP_RX_TIMER.

7. Upon reception of the Delay-Response message,

a. TR stops transmitting Delay-Request messages on port X,

b. TR sets CALIBRATION_DONE to TRUE,

c. TR disables and resets the DELAY_RESP_RX_TIMER, and

d. TR drops any further received Sync and Delay-Response messages.

8. Upon TT_DISCOVERY_TIMER timeout,

a. TR resets and disables the TT_DISCOVERY_TIMER, and

b. TR exits the calibration process.

9. Upon DELAY_RESP_RX_TIMER timeout,

a. TR resets and disables the DELAY_RESP_RX_TIMER, and

b. TR exits the calibration process.

Calibration data at the PTP TR 104 for port X is said to be acquired when CALIBRATION_DONE is TRUE. The PTP TR 104 implements and maintains a table CALIBRATION_TABLE with (PORT, DELAY) as columns. The PTP TR 104 performs <meanPathDelay>(D) calculations as per IEEE Std 1588™-2008 and IEEE Std 1588™-2019 to calculate the mean path delay for port X. After completing the calculation, the PTP TR 104 adds a row entry (X, D) to the table CALIBRATION_TABLE and calibration is said to be completed on port X at TR.

Note that if CALIBRATION_DONE is FALSE for a port, then the member link corresponding to this port cannot participate in link selection for PTP messages by the conventional LAG hashing algorithm.

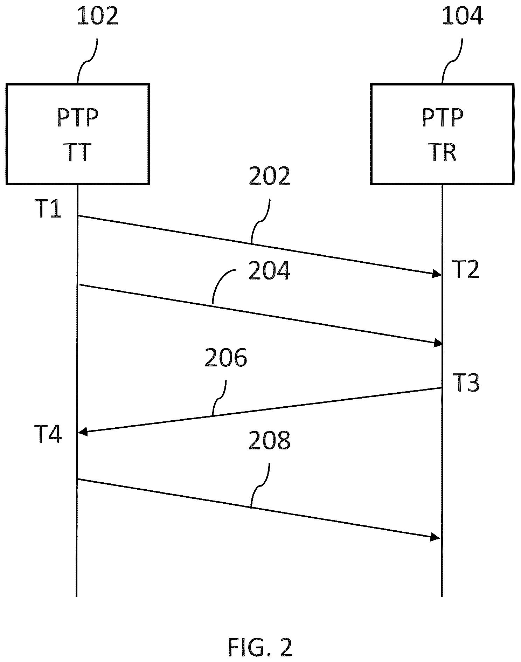

FIG. 2 is a diagram representing the following flow of messages during the link-delay-calibration operation between the PTP TT 102 and the PTP TR 104 for link Li:

- The PTP TT 102 transmits a PTP Sync message 202 to the PTP TR 104 over link Li;

- The PTP TT 102 records the PTP reference time (T1) of transmission of the PTP Sync message 202;

- The PTP TR 104 records the local time (T2) of receipt of the PTP Sync message 202;

- The PTP TT 102 conveys the PTP reference time (T1) in a PTP Follow-up message 204 to the PTP TR 104 over link Li if the PTP TT 102 port is two-step. If the PTP TT 102 port is one-step, then the PTP reference time (T1) is conveyed in the PTP Sync message 202 and the PTP Follow-up message 204 may be omitted. Note that, as long as the Follow-up message 204 identifies link Li, in theory, the Follow-up message 204 may be transmitted over any link in the LAG 106;

- The PTP TR 104 transmits a PTP Delay-Request message 206 to the PTP TT 102 over link Li;

- The PTP TR 104 records the local time (T3) of transmission of the PTP Delay-Request message 206;

- The PTP TT 102 records the PTP reference time (T4) of receipt of the PTP Delay-Request message 206; and

- The PTP TT 102 conveys, to the PTP TR 104, the PTP reference time (T4) of receipt of the PTP Delay-Request message 206 over link Li in a Delay-Response message 208. Note that, as long as the Delay-Response message 208 identifies link Li, in theory, the Delay-Response message 208 may be transmitted over any link in the LAG 106.

The PTP TR 104 uses the four time values T1 through T4 to calculate and store the calibrated, average transmission delay between the PTP TT 102 and the PTP TR 104 for the link Li in the table CALIBRATION_TABLE of calibrated, average transmission delays for all of the TR ports associated with links in the LAG 106 of FIG. 1.

The calibrated, average transmission delay (DELAY) may be calculated using the following equation:

$$DELAY = ((T2\text{-}T1) + (T4\text{-}T3)) / 2$$

Note that, in order to perform the link-delay-calibration operation, the normal, independent LAG processing at the PTP TR 104 is overridden (or otherwise not enabled) to ensure that the Delay-Request message 206 of FIG. 2 is transmitted over the same link (i.e., link Li being calibrated) used to transmit the Sync message 202.

The PTP TR 104 can then use its CALIBRATION_TABLE of calibrated average delay values for its ports associated with the different links L1-Ln in the LAG 106 during routine clock-sync operations. In this case, FIG. 2 may be said to represent the flow of messages during a routine clock-sync operation, but where the Delay-Request message 206 may be transmitted over a different link from the link used for the Sync message 202.

Assume, for example, that link Lj, having calibrated, average delay DELAYj, is used for the Sync message 202, while different link Lk, having calibrated, average delay DELAYk, is used for the Delay-Request message 206. In that case, the PTP TR 104 can calculate the delayAsymmetry (as defined in IEEE Std 1588™-2019) between link Lj and Lk:

$$delayAsymmetry = (DELAYj - DELAYk)$$

The PTP TR 104 can then use this delayAsymmetry to adjust its local clock to be synchronized with the PTP reference clock.

In some implementations of the link-delay-calibration operation, both the PTP TT 102 and the PTP TR 104 are explicitly configured to support a special calibration mode of operation. In other implementations, only the PTP TR 104 is explicitly configured to support a special calibration mode of operation. In that case, the link-delay-calibration operation can be performed for link Li the first time that the PTP TT 102 transmits a conventional Sync message to the PTP TR 104 over link Li, where the PTP TR 104 is programmed to override its conventional LAG processing to ensure that its Delay-Request message is transmitted over that same link Li. In those latter implementations, the PTP TT 102 may be a legacy PTP transmitter that is unaware of the link-delay-calibration operation being performed by the PTP TR 104.

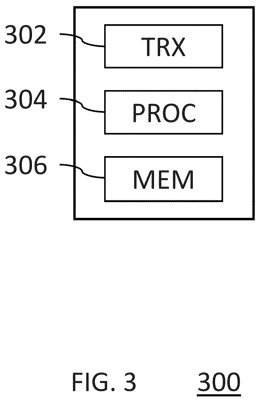

FIG. 3 is a simplified hardware block diagram of an example node 300 that can be used to implement the PTP TT 102 and the PTP TR 104 of FIGs. 1 and 2. As shown in FIG. 3, the node 300 includes (i) communication hardware (e.g., wireless, wireline, and/or optical transceivers (TRX)) 302 that supports communications with other nodes, (ii) one or more processors (e.g., CPU and/or GPU microprocessors) 304 that control the operations of the node 300 and/or process data within the node 300, and (iii) one or more memories (e.g., RAM, ROM) 306 that store code executed by the processors 304 and/or data generated and/or received by the node 300.

Although the disclosure has been described in the context of PTP systems that conform to the IEEE Std 1588™-2008 and IEEE Std 1588™-2019 standards and having a link aggregation group (LAG) between a PTP time transmitter and a PTP time receiver, those skilled in the art will understand that the present disclosure can be implemented in any suitable context to synchronize a local clock at a time receiver with a reference clock at a time transmitter, where there are multiple, possible (wired, wireless, or optical) paths between the receiver and the transmitter.

In certain embodiments, the present disclosure is a method for a time receiver having a local clock and connected to a time transmitter via a link aggregation group (LAG) comprising a plurality of LAG links between the time transmitter and the time receiver, the time transmitter having a reference clock. The method comprises the time receiver (i) receiving a first sync message from the time transmitter over a first of the LAG links; (ii) transmitting a first delay-request message to the time transmitter over the first LAG link; (iii) generating a first calibrated delay value for the first LAG link based on the first sync message and the first delay-request message; (iv) receiving a second sync message from the time transmitter over a second of the LAG links; (v) transmitting a second delay-request message to the time transmitter over the second LAG link; (vi) generating a second calibrated delay value for the second LAG link based on the second sync message and the second delay-request message; (vii) receiving a subsequent sync message from the time transmitter over the first LAG link; (viii) transmitting a subsequent delay-request message to the time transmitter over the second LAG link; and (ix) synchronizing the local clock to the reference clock based on the subsequent sync message, the subsequent delay-request message, the first calibrated delay value, and the second calibrated delay value.

In at least some of the above embodiments, the time receiver is a Precision Time Protocol (PTP) time receiver, and the sync and delay-request messages are PTP messages.

In at least some of the above embodiments, the first and second sync messages are link-calibration-phase sync messages.

In at least some of the above embodiments, the first and second sync messages are routine sync messages.

In certain other embodiments, the present disclosure is a method for a time transmitter having a reference clock and connected to a time receiver via a link aggregation group comprising a plurality of LAG links between the time transmitter and the time receiver, the time receiver having a local clock. The method comprises the time transmitter (i) transmitting a first link-calibration-phase sync message to the time receiver over a first of the LAG links; (ii) receiving a first link-calibration-phase delay-request message from the time receiver over the first LAG link to enable the time receiver to generate a first calibrated delay value for the first LAG link based on the first sync message and the first delay-request message; (iii) transmitting a second link-calibration-phase sync message to the time receiver over a second of the LAG links; (iv) receiving a second link-calibration-phase delay-request message from the time receiver over the second LAG link to enable the time receiver to generate a second calibrated delay value for the second LAG link based on the second sync message and the second delay-request message; (v) transmitting a subsequent routine sync message to the time receiver over the first LAG link; and (vi) receiving a subsequent routine delay-request message from the time receiver over the second LAG link to enable the time receiver to synchronize the local clock to the reference clock based on the subsequent sync message, the subsequent delay-request message, the first calibrated delay value, and the second calibrated delay value.

In at least some of the above embodiments, the time transmitter is a PTP time transmitter, and the sync and delay-request messages are PTP messages.

Unless explicitly stated otherwise, each numerical value and range should be interpreted as being approximate as if the word "about" or "approximately" preceded the value or range.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence. Likewise, additional steps may be included in such methods, and certain steps may be omitted or combined, in methods consistent with various embodiments of the disclosure.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Unless otherwise specified herein, the use of the ordinal adjectives "first," "second," "third," etc., to refer to an object of a plurality of like objects merely indicates that different instances of such like objects are being referred to, and is not intended to imply that the like objects so referred-to have to be in a corresponding order or sequence, either temporally, spatially, in ranking, or in any other manner.

Also, for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements. The same type of distinction applies to the use of terms "attached" and "directly attached," as applied to a description of a physical structure.

As used herein in reference to an element and a standard, the terms "compatible" and "conform" mean that the element communicates with other elements in a manner wholly or partially specified by the standard and would be recognized by other elements as sufficiently capable of communicating with the other elements in the manner specified by the standard. A compatible or conforming element does not need to operate internally in a manner specified by the standard.

The described embodiments are to be considered in all respects as only illustrative and not restrictive. In particular, the scope of the disclosure is indicated by the appended claims rather than by the description and figures herein. All changes that come within the meaning and range of equivalency of the claims are to be embraced within their scope.

The functions of the various elements shown in the figures, including any functional blocks labeled as "processors" and/or "controllers," may be provided through the use of dedicated hardware as well as hardware capable of executing software in association with appropriate software. Upon being provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those of ordinary skill in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

As will be appreciated by one of ordinary skill in the art, the present disclosure may be embodied as an apparatus (including, for example, a system, a network, a machine, a device, a computer program product, and/or the like), as a method (including, for example, a business process, a computer-implemented process, and/or the like), or as any combination of the foregoing. Accordingly, embodiments of the present disclosure may take the form of an entirely software-based embodiment (including firmware, resident software, micro-code, and the like), an entirely hardware embodiment, or an embodiment combining software and hardware aspects that may generally be referred to herein as a "system" or "network".

Embodiments of the disclosure can be manifest in the form of methods and apparatuses for practicing those methods. Embodiments of the disclosure can also be manifest in the form of program code embodied in tangible media, such as magnetic recording media, optical recording media, solid state memory, floppy diskettes, CD-ROMs, hard drives, or any other non-transitory machine-readable storage medium, wherein, upon the program code being loaded into and executed by a machine, such as a computer, the machine becomes an apparatus for practicing the disclosure. Embodiments of the disclosure can also be manifest in the form of program code, for example, stored in a non-transitory machine-readable storage medium including being loaded into and/or executed by a machine, wherein, upon the program code being loaded into and executed by a machine, such as a computer, the machine becomes an apparatus for practicing the disclosure. Upon being implemented on a general-purpose processor, the program code segments combine with the processor to provide a unique device that operates analogously to specific logic circuits. The term "non-transitory," as used herein, is a limitation of the medium itself (i.e., tangible, not a signal) as opposed to a limitation on data storage persistency (e.g., RAM vs. ROM).

Signals and corresponding terminals, nodes, ports, links, interfaces, or paths may be referred to by the same name and/or label and are interchangeable for purposes here.

In this specification including any claims, the term "each" may be used to refer to one or more specified characteristics of a plurality of previously recited elements or steps. When used with the open-ended term "comprising," the recitation of the term "each" does not exclude additional, unrecited elements or steps. Thus, it will be understood that an apparatus may have additional, unrecited elements and a method may have additional, unrecited steps, where the additional, unrecited elements or steps do not have the one or more specified characteristics.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. For example, the phrases "at least one of A and B" and "at least one of A or B" are both to be interpreted to have the same meaning, encompassing the following three possibilities: 1- only A; 2- only B; 3- both A and B.

All documents mentioned herein are hereby incorporated by reference in their entirety or alternatively to provide the disclosure for which they were specifically relied upon.

The embodiments covered by the claims in this application are limited to embodiments that (1) are enabled by this specification and (2) correspond to statutory subject matter. Non-enabled embodiments and embodiments that correspond to non-statutory subject matter are explicitly disclaimed even if they fall within the scope of the claims.

As used herein and in the claims, the term "provide" with respect to an apparatus or with respect to a system, device, or component encompasses designing or fabricating the apparatus, system, device, or component; causing the apparatus, system, device, or component to be designed or fabricated; and/or obtaining the apparatus, system, device, or component by purchase, lease, rental, or other contractual arrangement.

While preferred embodiments of the disclosure have been shown and described herein, it will be obvious to those skilled in the art that such embodiments are provided by way of example only. Numerous variations, changes, and substitutions will now occur to those skilled in the art without departing from the disclosure. It should be understood that various alternatives to the embodiments of the disclosure described herein may be employed in practicing the technology of the disclosure. It is intended that the following claims define the scope of the invention and that methods and structures within the scope of these claims and their equivalents be covered thereby.

**Claims**

1. A method for a time receiver having a local clock and connected to a time transmitter via a link aggregation group (LAG) comprising a plurality of LAG links between the time transmitter and the time receiver, the time transmitter having a reference clock, the method comprising the time receiver:

   receiving a first sync message from the time transmitter over a first of the LAG links;
   transmitting a first delay-request message to the time transmitter over the first LAG link;
   generating a first calibrated delay value for the first LAG link based on the first sync message and the first delay-request message;
   receiving a second sync message from the time transmitter over a second of the LAG links;
   transmitting a second delay-request message to the time transmitter over the second LAG link;
   generating a second calibrated delay value for the second LAG link based on the second sync message and the second delay-request message;
   receiving a subsequent sync message from the time transmitter over the first LAG link;
   transmitting a subsequent delay-request message to the time transmitter over the second LAG link; and
   synchronizing the local clock to the reference clock based on the subsequent sync message, the subsequent delay-request message, the first calibrated delay value, and the second calibrated delay value.

2. The method of claim 1, wherein:

   the time receiver is a Precision Time Protocol (PTP) time receiver; and
   the sync and delay-request messages are **PTP** messages.

3. The method of claim 1 or 2, wherein the first and second sync messages are link-calibration-phase sync messages.

4. The method of claim 1, 2 or 3, wherein the first and second sync messages are routine sync messages.

5. A time receiver having a local clock and connected to a time transmitter via a link aggregation group (LAG) comprising a plurality of LAG links between the time transmitter and the time receiver, the time transmitter having a reference clock, the time receiver comprising means to cause the time receiver at least to:

   receive a first sync message from the time transmitter over a first of the LAG links;
   transmit a first delay-request message to the time transmitter over the first LAG link;
   generate a first calibrated delay value for the first LAG link based on the first sync message and the first delay-request message;
   receive a second sync message from the time transmitter over a second of the LAG links;
   transmit a second delay-request message to the time transmitter over the second LAG link;
   generate a second calibrated delay value for the second LAG link based on the second sync message and the second delay-request message;
   receive a subsequent sync message from the time transmitter over the first LAG link;
   transmit a subsequent delay-request message to the time transmitter over the second LAG link; and
   synchronize the local clock to the reference clock based on the subsequent sync message, the subsequent delay-request message, the first calibrated delay value, and the second calibrated delay value.

6. The time receiver of claim 5, wherein:

   the time receiver is a Precision Time Protocol (PTP) time receiver; and
   the sync and delay-request messages are PTP messages.

7. The time receiver of claim 5 or 6, wherein the first and second sync messages are link-calibration-phase sync messages.

8. The time receiver of claim 5, 6 or 7, wherein the first and second sync messages are routine sync messages.

9. A method for a time transmitter having a reference clock and connected to a time receiver via a link aggregation group comprising a plurality of LAG links between the time transmitter and the time receiver, the time receiver having a local clock, the method comprising the time transmitter:

transmitting a first link-calibration-phase sync message to the time receiver over a first of the LAG links;

receiving a first link-calibration-phase delay-request message from the time receiver over the first LAG link to enable the time receiver to generate a first calibrated delay value for the first LAG link based on the first sync message and the first delay-request message;

transmitting a second link-calibration-phase sync message to the time receiver over a second of the LAG links;

receiving a second link-calibration-phase delay-request message from the time receiver over the second LAG link to enable the time receiver to generate a second calibrated delay value for the second LAG link based on the second sync message and the second delay-request message;

transmitting a subsequent routine sync message to the time receiver over the first LAG link; and

receiving a subsequent routine delay-request message from the time receiver over the second LAG link to enable the time receiver to synchronize the local clock to the reference clock based on the subsequent sync message, the subsequent delay-request message, the first calibrated delay value, and the second calibrated delay value.

10. The method of claim 9, wherein:

the time transmitter is a PTP time transmitter; and

the sync and delay-request messages are PTP messages.

11. A time transmitter having a reference clock and connected to a time receiver via a link aggregation group comprising a plurality of LAG links between the time transmitter and the time receiver, the time receiver having a local clock, the time transmitter comprising means to cause the time transmitter at least to:

transmit a first link-calibration-phase sync message to the time receiver over a first of the LAG links;

receive a first link-calibration-phase delay-request message from the time receiver over the first LAG link to enable the time receiver to generate a first calibrated delay value for the first LAG link based on the first sync message and the first delay-request message;

transmit a second link-calibration-phase sync message to the time receiver over a second of the LAG links;

receive a second link-calibration-phase delay-request message from the time receiver over the second LAG link to enable the time receiver to generate a second calibrated delay value for the second LAG link based on the second sync message and the second delay-request message;

transmit a subsequent routine sync message to the time receiver over the first LAG link; and

receive a subsequent routine delay-request message from the time receiver over the second LAG link to enable the time receiver to synchronize the local clock to the reference clock based on the subsequent sync message, the subsequent delay-request message, the first calibrated delay value, and the second calibrated delay value.

12. The time transmitter of claim 11, wherein:

the time transmitter is a **PTP** time transmitter; and

the sync and delay-request messages are **PTP** messages.

FIG. 1  100

FIG. 2

EP 4 783 492 A2

FIG. 3    300